# EUROPÄISCHE PATENTANMELDUNG

(11) **EP 0 891 029 A2**
(43) Veröffentlichungstag der Anmeldung: **13.01.1999**
(21) Anmeldenummer: 98810583.9
(22) Anmeldetag: 25.06.1998
(51) Int. Cl.: H02J 3/26

(54) **Verfahren zum Betrieb einer Leitung**

(30) Priorität: 11.07.1997 DE 19729658
(71) Anmelder: Asea Brown Boveri AG, 5401 Baden (CH)
(72) Erfinder: Glavitsch, Hans, Prof. Dr., 5415 Nussbaumen (CH); Rahmani, Mohamed, 8125 Zollikerberg (CH)
(74) Vertreter: Kaiser, Helmut, Dr.

(57) **Zusammenfassung**

Es wird ein Verfahren zum Betrieb einer mehrphasigen, in ein Übertragungsnetz eingebundenen, beim Auftreten von Fehlern freischaltbaren Leitung für die Übertragung von elektrischer Energie angegeben. Dieses Verfahren weist die folgenden Verfahrensschritte auf:
a) Erfassung von den Betriebszustand des Übertragungsnetzes kennzeichnenden Daten vor und nach der Leitung,
b) Verarbeitung der erfassten Daten zwecks Erkennung eines Fehlers,
c) Abschaltung mindestens einer fehlerbehafteten Phase der Leitung aufgrund des erkannten Fehlers, und
d) Aktivierung eines Symmetrierkompensators, welcher Kompensationsströme so in das Übertragungsnetz einspeist, dass die im Übertragungsnetz fliessenden Ströme ein symmetrisches System bilden.

Dieses Verfahren weist den grossen Vorteil auf, dass jetzt auch mit Fehlern behaftete Leitungen für die Übertragung von elektrischer Energie verwendet werden können.

## Beschreibung

### TECHNISCHES GEBIET

Die Erfindung betrifft ein Verfahren zum Betrieb einer mehrphasigen, in ein Übertragungsnetz eingebundenen Leitung für die Übertragung von elektrischer Energie und eine Vorrichtung zur Durchführung dieses Verfahrens.

### STAND DER TECHNIK

Treten in einer Leitung in einem elektrischen Übertragungsnetz Fehler auf, so wird in der Regel mittels Schnellwiedereinschaltung versucht, den Fehler in der Leitung zu beheben. Wenn die Schnellwiedereinschaltung jedoch nicht zum Erfolg führt, so muss die betroffene Leitung dreiphasig so lange abgeschaltet werden, bis der Fehler behoben ist. Während der Dauer dieser Abschaltung kann die betroffene Leitung nicht benutzt werden. Wenn diese abgeschaltete Leitung als Verbindung zwischen zwei wichtigen Knoten des Übertragungsnetzes dient, so kann diese Unterbrechung Probleme im Netzbetrieb verursachen, sie kann sich beispielsweise negativ auf die Stabilität des Netzes auswirken oder sie kann zur thermischen Überlastung von im Netz verbliebenen Leitungen führen.

Der Einsatz von Dreipunkt-Wechselrichtern in Übertragungsnetzen ist beispielsweise aus dem Beitrag "Analysis of a 3-level-VSI neutral-point-control for fundamental frequency modulated SVC-applications" bekannt, der beim IEE Meeting, 29. April-3. Mai 1996, vorgestellt wurde, und der als Conference Publication No. 423, Seiten 303 bis 310, veröffentlicht wurde.

### KURZE DARSTELLUNG DER ERFINDUNG

Der Erfindung, wie sie im Patentanspruch 1 definiert ist, liegt die Aufgabe zugrunde, ein Verfahren den für den Betrieb einer mehrphasigen, in ein Leitungsnetz eingebundenen Leitung anzugeben, welches die Verfügbarkeit dieser Leitung im Fehlerfall wesentlich verbessert, ferner soll eine Vorrichtung für die Durchführung dieses Verfahrens angegeben werden.

Das erfindungsgemässe Verfahren erlaubt es, mit vergleichsweise geringem Aufwand die Verfügbarkeit teilweise gestörter Leitungen wesentlich zu verbessern. Die Erfindung ermöglicht die bessere Ausnutzung von bestehenden Leitungen, was besonders in Bereichen, wo der Bau neuer Hochspannungs-Übertragungsleitungen nicht durchsetzbar ist, zur wesentlichen Verbesserung der Übertragungssicherheit bestehender Leitungen führt.

Statistische Erhebungen zeigen, dass die grosse Mehrheit aller Fehler in Leitungen von Übertragungsnetzen einphasige Fehler sind. Mittels der Erfindung können die negativen Auswirkungen dieser überwiegenden Mehrheit aller Fehler vorteilhaft reduziert werden, da in der Regel trotz des einphasigen Fehlers etwas mehr als zwei Drittel der Energieübertragungskapazität der gesunden Leitung erhalten bleiben. Die Auswirkungen von zweiphasigen Fehlern in einem dreiphasigen Übertragungsnetz können mittels der Erfindung ebenfalls zum Teil kompensiert werden. In der Regel kann in diesem Fall ein Leistungsfluss von etwas mehr als einem Drittel der Leistung, welche im ungestörten Betrieb durch diese Leitung fliesst, aufrecht erhalten werden.

Ausführungsbeispiele der Erfindung und die damit erzielbaren Vorteile werden nachfolgend anhand der Zeichnung, welche lediglich einen möglichen Ausführungsweg darstellt, näher erläutert.

### KURZE BESCHREIBUNG DER ZEICHNUNG

Es zeigen:
Fig. 1 einen Ausschnitt aus einem Übertragungsnetz mit einer schematisch dargestellten ersten Ausführungsform einer erfindungsgemässen Vorrichtung,
Fig. 2 eine schematisch dargestellte zweite Ausführungsform der erfindungsgemässen Vorrichtung,
Fig. 3 ein Blockdiagramm eines erfindungsgemässen Verfahrens, und
die Fig. 4 bis 7 Vektordiagramme, welche die Arbeitsweise eines Symmetrierkompensators bezogen auf die Symmetrierung eines Übertragungsnetzes verdeutlichen.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

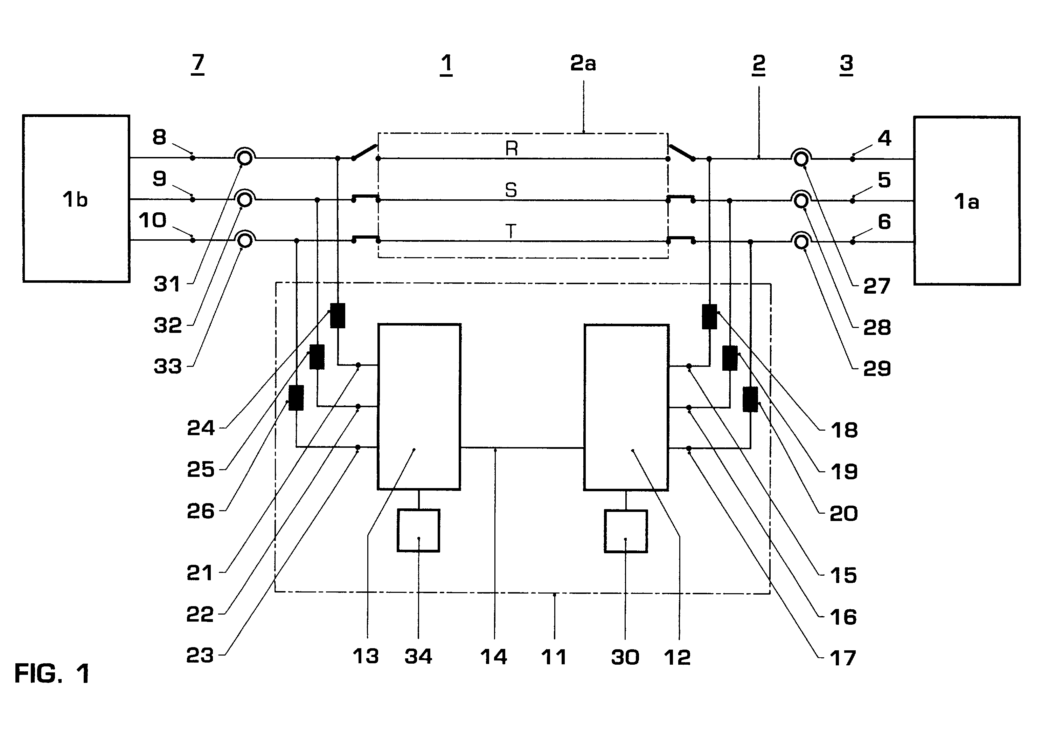

Die Fig. 1 zeigt einen Ausschnitt aus einem dreiphasigen Übertragungsnetz 1, welches durch zwei Teilnetze 1a und 1b, schematisch dargestellt ist. In diesem Übertragungsnetz 1 verbindet eine dreiphasige Leitung 2 einen ersten, mit dem Teilnetz la verbundenen Netzknoten 3, der die Klemmen 4,5,6 aufweist, mit einem zweiten, mit dem Teilnetz 1b verbundenen Netzknoten 7, der die Klemmen 8,9,10 aufweist. Zwischen den Klemmen 4 und 8 erstreckt sich die Phase R der Leitung 2, zwischen den Klemmen 5 und 9 erstreckt sich die Phase S der Leitung 2 und zwischen den Klemmen 6 und 10 erstreckt sich die Phase T der Leitung 2. Die Leitung 2 weist einen abschaltbaren Bereich 2a auf, an dessen beiden Enden in jeder Phase in bekannter Anordnung nicht bezeichnete Leistungsschalter vorgesehen sind, welche die jeweilige Phase abschalten und vollständig vom Übertragungsnetz 1 abtrennen können, wenn beispielsweise ein Fehler in dieser Phase auftreten sollte. In der Fig. 1 ist die Phase R als abgeschaltet dargestellt, die anderen beiden Phasen S und T sind weiterhin in Betrieb.

Parallel zu der Leitung 2 ist ein Symmetrierkompensator 11 geschaltet. Der Symmetrierkompensator 11 weist zwei mit GTO-Thyristoren oder mit IGBT's beschaltete Dreipunkt-Wechselrichter 12 und 13 auf, die mittels einem separaten Ausgleichsleiter 14 miteinander verbunden sind. Der erste Dreipunkt-Wechselrichter 12 weist drei Eingangsklemmen 15,16,17 auf. Die Eingangsklemme 15 ist mit der Klemme 4 des Netzknotens 3 elektrisch leitend verbunden, wobei in dieser Verbindung eine Steuerdrossel 18 vorgesehen ist. Die Eingangsklemme 16 ist mit der Klemme 5 des Netzknotens 3 elektrisch leitend verbunden, wobei in dieser Verbindung eine Steuerdrossel 19 vorgesehen ist. Die Eingangsklemme 17 ist mit der Klemme 6 des Netzknotens 3 elektrisch leitend verbunden, wobei in dieser Verbindung eine Steuerdrossel 20 vorgesehen ist.

Der zweite Dreipunkt-Wechselrichter 13 weist drei Eingangsklemmen 21,22,23 auf. Die Eingangsklemme 21 ist mit der Klemme 8 des Netzknotens 7 elektrisch leitend verbunden, wobei in dieser Verbindung eine Steuerdrossel 24 vorgesehen ist. Die Eingangsklemme 22 ist mit der Klemme 9 des Netzknotens 7 elektrisch leitend verbunden, wobei in dieser Verbindung eine Steuerdrossel 25 vorgesehen ist. Die Eingangsklemme 23 ist mit der Klemme 10 des Netzknotens 7 elektrisch leitend verbunden, wobei in dieser Verbindung eine Steuerdrossel 26 vorgesehen ist.

Es ist jedoch auch vorstellbar, dass bei gewissen Anwendungen die Eigeninduktivität der erwähnten Verbindungen so gross ist, dass der Einbau von separaten Steuerdrosseln nicht nötig ist. Werden die Dreipunkt-Wechselrichter 12 und 13 mittels Kupplungstransformatoren mit den Netzknoten 3 und 7 verbunden, so dürfte in der Regel die Streuinduktivität dieser Kupplungstransformatoren für die Steuerfunktion genügen.

Jede der Phasen R, S und T ist vor dem abschaltbaren Bereich 2a der Leitung 2 mit schematisch angedeuteten Sensoren 27,28,29 bestückt, welche der Überwachung des Zustandes und der Belastung der Leitung 2 dienen, insbesondere werden unter anderem auch die durch die Phasen R, S und T der Leitung 2 fliessenden Ströme erfasst. Diese Sensoren 27,28,29 stehen einerseits mit dem Schutz der Leitung 2 und andererseits mit einer Verarbeitungseinheit 30 in Wirkverbindung, welche ebenfalls die durch die Sensoren 27,28,29 erfassten Daten verarbeitet. Wenn der Schutz einen Fehler erkennt und gegebenenfalls Steuerbefehle für das Abschalten von einzelnen Phasen der Leitung 2 generiert, so erkennt die Verarbeitungseinheit 30 diesen Sachverhalt ebenfalls und sorgt für die entsprechende Ansteuerung des Dreipunkt-Wechselrichters 12, der dann so aktiviert wird, dass er beginnt als Teil des Symmetrierkompensators 11 zu arbeiten. Wenn dieser Dreipunkt-Wechselrichter 12 vor dieser Aktivierung als Blindleistungskompensator oder als Spannungsregler gearbeitet hat, so nimmt er diese Aufgabe weiterhin wahr, falls das im Hinblick auf den geänderten Betriebszustand des Übertragungsnetzes 1 nötig sein sollte.

Jede der Phasen R, S und T ist nach dem abschaltbaren Bereich 2a der Leitung 2 mit schematisch dargestellten Sensoren 31,32,33 bestückt, welche der Überwachung des Zustandes und der Belastung der Leitung 2 dienen, insbesondere werden unter anderem auch die durch die Phasen R, S und T der Leitung 2 fliessenden Ströme erfasst. Diese Sensoren 31,32,33 stehen einerseits mit dem Schutz der Leitung 2 und andererseits mit einer Verarbeitungseinheit 34 in Wirkverbindung, welche ebenfalls die durch die Sensoren 31,32,33 erfassten Daten verarbeitet. Wenn der Schutz einen Fehler erkennt und gegebenenfalls Steuerbefehle für das Abschalten von einzelnen Phasen der Leitung 2 generiert, so erkennt die Verarbeitungseinheit 34 diesen Sachverhalt ebenfalls und sorgt für die entsprechende Ansteuerung des Dreipunkt-Wechselrichters 13, der dann so aktiviert wird, dass er ebenfalls beginnt als Teil des Symmetrierkompensators 11 zu arbeiten. Wenn dieser Dreipunkt-Wechselrichter 13 vor dieser Aktivierung als Blindleistungskompensator oder Spannungsregler gearbeitet hat, so nimmt er diese Aufgabe weiterhin wahr, falls das im Hinblick auf den geänderten Betriebszustand des Übertragungsnetzes 1 nötig sein sollte. Die beiden Verarbeitungseinheiten 30 und 34 können mittels einer Steuerleitung miteinander verbunden sein, wodurch ein synchrones Arbeiten der beiden Dreipunkt-Wechselrichter 12 und 13 erreicht wird. Die beiden Verarbeitungseinheiten 30 und 34 wirken mit dem Schutz und mit der übergeordneten Leittechnik für das Übertragungsnetz 1 zusammen, sodass die Betriebssicherheit des Übertragungsnetzes 1 wesentlich erhöht wird.

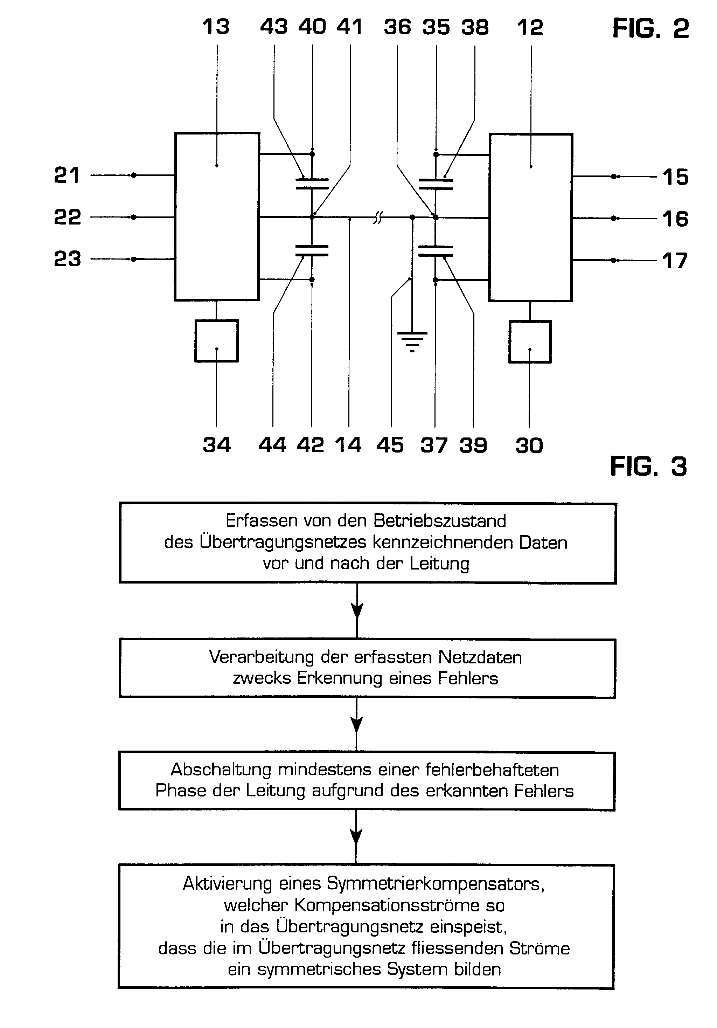

Die Fig.2 zeigt eine Möglichkeit, wie die Gleichspannungsausgänge der Dreipunkt-Wechselrichter 12 und 13 beschaltet werden können. Der Dreipunkt-Wechselrichter 12 weist ausgangsseitig eine positive Klemme 35, eine Mittelklemme 36 und eine negative Klemme 37 auf. Zwischen der positiven Klemme 35 und der Mittelklemme 36 ist ein Kondensator 38 angeordnet. Zwischen der negativen Klemme 37 und der Mittelklemme 36 ist ein Kondensator 39 angeordnet. Die beiden Kondensatoren 38 und 39 weisen die gleiche Kapazität auf. Wenn der Symmetrierkompensator 11 aktiviert ist, dienen diese beiden Kondensatoren 38 und 39 als Energiespeicher.

Der Dreipunkt-Wechselrichter 13 weist ausgangsseitig eine positive Klemme 40, eine Mittelklemme 41 und eine negative Klemme 42 auf. Zwischen der positiven Klemme 40 und der Mittelklemme 41 ist ein Kondensator 43 angeordnet. Zwischen der negativen Klemme 42 und der Mittelklemme 41 ist ein Kondensator 44 angeordnet. Die beiden Kondensatoren 43 und 44 weisen die gleiche Kapazität auf. Wenn der Symmetrierkompensator 11 aktiviert ist, dienen diese beiden Kondensatoren 43 und 44 als Energiespeicher. In der Regel weisen die Kondensatoren 38,39,43 und 44 die gleiche Kapazität auf. Die beiden Mittelklemmen 36 und 37 werden durch den Ausgleichsleiter 14 miteinander verbunden.

Der Ausgleichsleiter 14 ist im Nahbereich der Mittelklemme 36 geerdet, wie eine Erdverbindung 45 zeigt. Diese Erdung dürfte in der Regel direkt sein, es ist jedoch unter bestimmten Netzbedingungen auch möglich, einen ohm`schen Widerstand in die Erdverbindung 45 zu schalten. Durch den Ausgleichsleiter 14 und die Leitung 2 fliessen, wenn der Symmetrierkompensator 11 aktiviert ist, die Ströme des Nullsystems. Bezogen auf die Teilnetze 1a und 1b wird in diesem Fall das Nullsystem, wenn das dreiphasige Stromsystem als Mit-, Gegen- und Nullsystem betrachtet wird, vollständig unterdrückt.

Die Fig. 3 zeigt ein Blockdiagramm eines erfindungsgemässen Verfahrens. Dieses Verfahren zum Betrieb einer mehrphasigen, in ein Übertragungsnetz 1 eingebundenen, beim Auftreten von Fehlern phasenweise freischaltbaren Leitung 2 für die Übertragung von elektrischer Energie, weist die folgenden Verfahrensschritte auf:
a) Erfassung des Zustandes des Übertragungsnetzes 1 vor und nach der Leitung 2 mittels der Sensoren 27,28,29,31,32 und 33,
b) Verarbeitung der erfassten Daten zwecks Erkennung eines Fehlers,
c) Abschaltung mindestens einer fehlerbehafteten Phase R der Leitung 2 aufgrund des erkannten Fehlers, und
d) Aktivierung des Symmetrierkompensators 11, welcher Kompensationsströme so in das Übertragungsnetz 1 einspeist, dass die im Übertragungsnetz 1 fliessenden Ströme ein symmetrisches System bilden.

Die Aktivierung des Symmetrierkompensators 11 erfolgt in der Regel zeitgleich mit der Abschaltung der fehlerbehafteten Phase R der Leitung 2. Die Übertragung der elektrischen Energie erfolgt danach über die nicht fehlerbehafteten Phasen der Leitung 2, bei diesem Ausführungsbeispiel sind es die Phasen S und T, die nach der Abschaltung des Fehlers für die Energieübertragung weiterhin zur Verfügung stehen. Der Symmetrierkompensator 11 arbeitet in der Regel vor seiner Aktivierung als Blindleistungskompensator oder als Spannungsregler, er behält diese Funktion auch dann bei, wenn er zusätzlich als Symmetrierkompensator 11 aktiviert ist, falls das im Hinblick auf den geänderten Betriebszustand des Übertragungsnetzes 1 weiterhin nötig sein sollte.

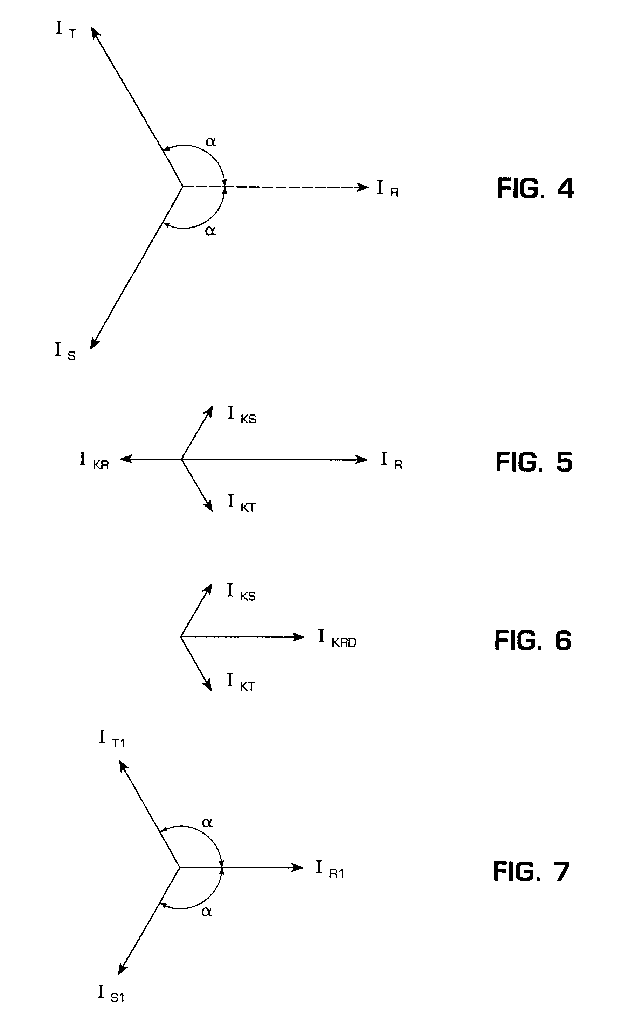

Zur Erläuterung der Wirkungsweise des Symmetrierkompensators 11 werden nun die Figuren 4 bis 7 betrachtet. Die Figur 4 zeigt ein Vektordiagramm der drei dem Betrag nach gleich grossen Ströme, die im als ideal angenommenen Normalbetrieb durch die zunächst fehlerfreie Leitung 2 fliessen. Der gestrichelt ausgeführte Vektor I_{R} stellt den in der Phase R fliessenden Strom dar, der Vektor I_{S} stellt den in der Phase S fliessenden Strom dar, der Vektor I_{T} stellt den in der Phase T fliessenden Strom dar. Die drei Vektoren I_{R}, I_{S} und I_{T} sind hier jeweils um einen Winkel a gegeneinander verdreht, wobei dieser Winkel a im zugrunde gelegten Idealfall 120° beträgt. Sobald die Phase R wegen eines Fehlers abgeschaltet wird, kann der Strom I_{R} nicht mehr durch diese Phase der Leitung 2 fliessen, der gestrichelt ausgeführte Vektor I_{R} muss dann als nicht vorhanden betrachtet werden. Das Übertragungsnetz 1 ist an dieser Stelle nun unsymmetrisch belastet. Würde dieser Betriebszustand beibehalten, so würden in einem herkömmlich ausgelegten und betriebenen Übertragungsnetz 1 Störungen an den drehenden Maschinen auftreten und es würden vergleichsweise grosse und unzulässige Spannungsabsenkungen auftreten. Der Schutz des Übertragungsnetzes 1 müsste deshalb in diesem Fall unbedingt die fehlerbehaftete Leitung 2 dreipolig abschalten, die damit verbundenen Nachteile müssten in Kauf genommen werden, um grössere Sekundärschäden zu vermeiden. Die fehlerbehaftete Leitung würde damit vollständig für die Energieübertragung ausfallen.

Wird jedoch zusammen mit dem einphasigen Abschalten der fehlerbehafteten Phase R der Symmetrierkompensator 11 aktiviert, so können die negativen Auswirkungen des Fehlers auf den Betrieb des Übertragungsnetzes 1 vorteilhaft reduziert werden. Mit dem zugleich mit dem Ausschalten der Phase R erfolgten Aktivieren des Symmetrierkompensators 11 setzt sofort auf beiden Seiten der einphasig unterbrochenen Leitung 2 die Umformung der unsymmetrischen in eine symmetrische Belastung des Übertragungsnetzes 1 ein. Wenn davon ausgegangen wird, dass das Teilnetz la die elektrische Energie über die Leitung 2 in das Teilnetz 1b einspeist, so wird mit dem Dreipunkt-Wechselrichter 12 des Symmetrierkompensators 11 eine einphasige Belastung in das Teilnetz la eingebracht, die der nun im Netz fehlenden Belastung durch die Phase R der Leitung 2 im Hinblick auf Amplitude und Phasenlage genau entspricht. Infolge dieser Massnahme entsteht auf dieser Seite der Leitung 2 eine symmetrische Belastung des Übertragungsnetzes 1. Auf der gegenüber liegenden Seite der Leitung 2 muss durch den Dreipunkt-Wechselrichter 13 der dort fehlende Phasenstrom der Phase R mit der richtigen Phasenlage und der richtigen Amplitude in das Teilnetz 1b eingespeist werden, sodass auch auf dieser Seite trotz des Fehlers ebenfalls symmetrische Netzverhältnisse herrschen. Vom Übertragungsnetz 1 her betrachtet, stellt die fehlerbehaftete Leitung 2 zusammen mit dem zu ihr parallel geschalteten und nun aktivierten Symmetrierkompensator 11 eine symmetrische Belastung dar, wenn die stets in einem Übertragungsnetz vorhandenen, beispielsweise durch unterschiedliche Leitungsimpedanzen in den Phasen bedingten, Abweichungen vernachlässigt werden.

Der dem in Fig. 4 dargestellten Vektor I_{R} entsprechende Strom wird nach der Aktivierung des Symmetrierkompensators 11 durch den Dreipunkt-Wechselrichter 12, aus dem Übertragungsnetz 1 herausgesaugt, sodass das Teilnetz la nach wie vor mit dem gleichen dreiphasigen Strom wie vor der Störung, entsprechend dem in Fig. 4 gezeigten Vektordiagramm, belastet wird. Der Dreipunkt-Wechselrichter 12 formt diesen Einphasenstrom um in einen dreiphasigen Kompensatorstrom.

Dieser dreiphasige Kompensatorstrom setzt sich, wie aus der Fig. 5 ersichtlich, aus folgenden Komponenten zusammen: dem Vektor I_{KR}, welcher dem aus der Phase R des Teilnetzes 1 herausgesaugten, durch den Vektor I_{R} dargestellten Strom genau entgegengesetzt gerichtet ist und welcher ein Drittel des Betrags des Vektors I_{R} aufweist, dem Vektor I_{KS}, welcher dem in der Phase S des Übertragungsnetzes 1 fliessenden, durch den Vektor I_{S} dargestellten Strom genau entgegengesetzt gerichtet ist und welcher ein Drittel des Betrags des Vektors I_{S} aufweist, und dem Vektor I_{KT}, welcher dem in der Phase T des Übertragungsnetzes 1 fliessenden, durch den Vektor I_{T} dargestellten Strom genau entgegengesetzt gerichtet ist und welcher ein Drittel des Betrags des Vektors I_{T} aufweist.

Die Fig. 6 zeigt das aus der Fig. 5 abgeleitete nach der Überlagerung der Vektoren I_{R} und I_{KR} zum resultierenden Vektor I_{KRD} entstandene definitive Vektordiagramm des Kompensatorstroms. Dieser Kompensatorstrom wird den im Teilnetz la fliessenden Strömen, die durch die Vektoren I_{S} und I_{T} in der Fig.4 dargestellt sind, überlagert. In der Fig. 7 ist das Ergebnis dieser Überlagerung dargestellt. Die resultierenden Vektoren I_{R1}, I_{S1} und I_{T1} stellen die in den Phasen R, S und T des Teilnetzes la fliessenden resultierenden symmetrischen Ströme dar, sie weisen jeweils einen Betrag von zwei Dritteln der zugeordneten phasengleichen Vektoren I_{R}, I_{S} und I_{T} auf. Dabei entspricht der Vektor I_{R1} dem Vektor I_{KRD} des Kompensatorstroms nach Betrag und Phasenlage. Das Teilnetz la ist jedoch, ebenso wie das Teilnetz 1b, als starres Netz mit konstanter Netzspannung zu betrachten, welches den Netzknoten 3 beaufschlagt und welches etwaige Strom- und Spannungsschwankungen in diesem Bereich sofort ausgleicht.

Der zweite Dreipunkt-Wechselrichter 13 wirkt ähnlich wie der eben beschriebene Dreipunkt-Wechselrichter 12 auf das Teilnetz 1b des Übertragungsnetzes 1 ein, allerdings zieht er einen entsprechenden dreiphasigen Strom aus dem Teilnetz 1b heraus und formt ihn um und speist dafür in der Phase R einen einphasigen, dem Vektor I_{R} in Betrag und Phase entsprechenden Strom in das Teilnetz 1b ein. Durch den die beiden Dreipunkt-Wechselrichter 12 und 13 verbindenden Ausgleichs leiter 14 fliessen die zum Nullsystem gehörenden Ströme. Der Stromkreis für das Nullsystem schliesst sich über die beiden gesunden Phasen S und T der Leitung 2.

Der Betrag der beiden Vektoren I_{S} und I_{T}, welche die in den gesunden Phasen fliessenden Ströme darstellen, ist jedoch, wenn reale Netzverhältnisse zugrunde gelegt werden, stets etwas grösser als der Betrag der entsprechenden Vektoren I_{S} und I_{T} im ungestörten Netzbetrieb. Die beiden gesunden Phasen S und T der Leitung 2 übertragen deshalb in der Regel wesentlich mehr als zwei Drittel der Gesamtleistung, welche die nicht fehlerbehaftete Leitung 2 übertragen kann. In einem üblichen 380 kV-Übertragungsnetz werden über eine Leitung bei der eine Phase abgeschaltet ist, abhängig von der Länge der Leitung, im Bereich von 80% bis 90% der im ungestörten Betrieb übertragenen Leistung übertragen. Diese vorteilhaft hohe Leistung, die mit einer einphasig gestörten Leitung 2 übertragen werden kann, hat ein wesentlich verbessertes Betriebsverhalten und eine bessere Verfügbarkeit des Übertragungsnetzes 1 zur Folge.

Wenn zwei Leitungen 2 parallel betrieben werden, so wirkt der Symmetrierkompensator 11 im Fehlerfall auf beide Leitungen 2 ein. In so einem Fall werden bei einer einphasigen Störung in einer der beiden Leitungen 2, abhängig von der Länge der Leitungen 2, im Bereich von 93% bis 97% der im ungestörten Betrieb übertragenen Leistung übertragen.

Mit Hilfe des Symmetrierkompensators 11 können bestehende Leitungen 2 besser ausgenutzt werden, was besonders in Bereichen, wo der Bau neuer Hochspannungs-Übertragungsleitungen nicht durchsetzbar ist, zur wesentlichen Verbesserung der Übertragungssicherheit bestehender Leitungen 2 führt.

Statistische Erhebungen zeigten, dass die grosse Mehrheit aller Fehler in Übertragungsnetzen 1 mit Betriebsspannungen oberhalb 110 kV einphasige Fehler sind. Werden vermehrt Symmetrierkompensatoren 11 in diesen Netzen eingesetzt, so können die negativen Auswirkungen dieser überwiegenden Mehrheit aller Fehler vorteilhaft reduziert werden.

Besonders vorteilhaft wirkt es sich ferner aus, dass auch die Auswirkungen von zweiphasigen Fehlern in einem dreiphasigen Übertragungsnetz 1 mittels des Symmetrierkompensators 11 zum Teil kompensiert werden können. In der Regel kann in diesem Fall ein Leistungsfluss von etwas mehr als einem Drittel der Leistung, welche im ungestörten Betrieb fliesst, aufrecht erhalten werden.

Wenn aus einem Übertragungsnetz 1 eine Stichleitung zu einem grossen Verbraucher führt, so ist es vorteilhaft, wenn diese Stichleitung mit einem Symmetrierkompensator 11 ausgestattet wird, da auf diese Art eine auch im Fehlerfall unterbrechungslose Energieversorgung sichergestellt ist. Zudem können auf diese Art auch die besonders wichtigen Leitungen 2 ertüchtigt werden, welche die Übertragungsnetze von zwei Ländern verbinden.

Es ist eine Vielzahl von vorteilhaften Anwendungsmöglichkeiten des Symmetrierkompensators 11 vorstellbar, da seine Anwendung nicht nur auf die Hochspannungsnetze begrenzt ist, auch in Mittel- und Niederspannungsnetzen kann der Symmetrierkompensator 11 vorteilhaft eingesetzt werden.

Der Ausgleichs leiter 14 kann beim Nachrüsten einer bestehenden Frei leitung mit einem Symmetrierkompensator 11 in der Regel zusätzlich an den bereits vorhandenen Freileitungsmasten angebracht werden. Da sich auf dem einseitig geerdeten Ausgleichsleiter 14 keine allzu hohe Spannung aufbauen kann, ist der Platzbedarf für diesen zusätzlichen Leiter vergleichsweise gering, sodass auf allen heute üblichen Freileitungsmasten hinreichend Platz vorhanden ist. Selbst wenn der Ausgleichsleiter 14 wegen hoher Strombelastungen als Doppelleitung geführt werden müsste, so reicht der verfügbare Platz auch hierfür aus. Der nachträgliche Einbau des Ausgleichsleiters 14 ist demnach mit vergleichsweise geringem Aufwand möglich.

Wenn bestehende Übertragungsnetze mit Symmetrierkompensatoren 11 in jeder Unterstation ausgerüstet werden, und diese Symmetrierkompensatoren 11 dann beim Auftreten eines Fehlers aktiviert werden, so werden, wie bereits beschrieben, die Nullströme durch den jeweils aktivierten Symmetrierkompensator 11 aufgenommen. Die dann noch verbleibenden Restströme werden von den benachbarten Symmetrierkompensatoren 11 übernommen, sodass die Symmetrierkompensatoren 11 insgesamt mit einer kleineren installierten Leistung ausgestattet werden können, wodurch die Wirtschaftlichkeit des gesamten Konzepts vorteilhaft gesteigert wird.

### BEZEICHNUNGSLISTE

- 1: Übertragungsnetz
- 1a,1b: Teilnetz
- 2a: abschaltbarer Bereich
- 2: Leitung
- 3: Netzknoten
- 4,5,6: Klemmen
- 7: Netzknoten
- 8,9,10: Klemmen
- 11: Symmetrierkompensator
- 12,13: Dreipunkt-Wechselrichter
- 14: Ausgleichsleiter
- 15,16,17: Eingangsklemmen
- 18,19,20: Steuerdrossel
- 21,22,23: Eingangsklemmen
- 24,25,26: Steuerdrossel
- 27,28,29: Sensoren
- 30: Verarbeitungseinheit
- 31,32,33: Sensoren
- 34: Verarbeitungseinheit
- 35: positive Klemme
- 36: Mittelklemme
- 37: negative Klemme
- 38,39: Kondensator
- 40: positive Klemme
- 41: Mittelklemme
- 42: negative Klemme
- 43,44: Kondensator
- 45: Erdverbindung
- R,S,T: Phasenbezeichnung
- I_{R},I_{S},I_{T}: Vektor des Netzstroms bei Normalbetrieb
- I_{KR},I_{KS},I_{KT}: Vektor des Kompensatorstroms
- I_{R1},I_{S1},I_{T1}: Vektor des Netzstroms bei aktiviertem Symmetrierkompensator
- I_{KRD}: Vektor des Kompensatorstroms

## Patentansprüche

1. Verfahren zum Betrieb einer mehrphasigen, in ein Übertragungsnetz (1) eingebundenen, beim Auftreten von Fehlern freischaltbaren Leitung (2) für die Übertragung von elektrischer Energie, welches folgende Verfahrensschritte aufweist:
a) Erfassung von den Betriebszustand des Übertragungsnetzes (1) kennzeichnenden Daten vor und nach der Leitung (2),
b) Verarbeitung der erfassten Daten zwecks Erkennung eines Fehlers,
c) Abschaltung mindestens einer fehlerbehafteten Phase (R) der Leitung (2) aufgrund des erkannten Fehlers, und
d) Aktivierung eines Symmetrierkompensators (11), welcher Kompensationsströme so in das Übertragungsnetz (1) einspeist, dass die im Übertragungsnetz (1) fliessenden Ströme ein symmetrisches System bilden.

2. Verfahren nach Anspruch 1, dadurch gekennzeichnet,
- dass die Aktivierung des Symmetrierkompensators (11) zeitgleich mit dem Abschaltbefehl für die mindestens eine fehlerbehaftete Phase (R) der Leitung (2) erfolgt.

3. Verfahren nach Anspruch 1 oder 2, dadurch gekennzeichnet,
- dass eine Energieübertragung durch die mindestens eine nicht fehlerbehaftete Phase (S,T) der Leitung (2) erfolgt.

4. Verfahren nach Anspruch 2, dadurch gekennzeichnet,
- dass der Symmetrierkompensator (11) vor und nach seiner Aktivierung weiterhin als Blindleistungskompensator oder als Spannungsregler arbeitet.

5. Vorrichtung zur Durchführung des Verfahrens nach Anspruch 1, welche eine beim Auftreten von Fehlern freischaltbare Leitung (2) für die Übertragung von elektrischer Energie, Sensoren (27,28,29,31,32,33) für die Erfassung von den Betriebszustand des Übertragungsnetzes (1) kennzeichnenden Daten vor und nach der Leitung (2) und eine Verarbeitungseinrichtung für die erfassten Daten umfasst, dadurch gekennzeichnet,
- dass ein vor und nach der Leitung (2) mit den Phasen (R,S,T) des Übertragungsnetzes (1) verbundener Symmetrierkompensator (11) parallel zu der Leitung (2) geschaltet ist.

6. Vorrichtung nach Anspruch 5, dadurch gekennzeichnet,
- dass der Symmetrierkompensator (11) mindestens zwei eingangsseitig mit den Phasen des Übertragungsnetzes (1) verbundene Mehrpunkt-Wechselrichter aufweist, von denen ein erster an einem Anfang der Leitung (2) und ein zweiter an einem Ende der Leitung (2) angeordnet ist, und
- dass die mindestens zwei Mehrpunkt-Wechselrichter mittels mindestens eines Ausgleichsleiters (14) miteinander verbunden sind.

7. Vorrichtung nach Anspruch 6, dadurch gekennzeichnet,
- dass bei einem Dreiphasennetz die Mehrpunkt-Wechselrichter als Dreipunkt-Wechselrichter (12,13) ausgebildet sind.

8. Vorrichtung nach Anspruch 7, dadurch gekennzeichnet,
- dass jeder der Dreipunkt-Wechselrichter (12,13) ausgangsseitig mit Kondensatoren (38,39,43,44) beschaltet ist, wobei jeweils zwischen einer positiven Klemme (35,40) und einer Mittelklemme (36,41) ein erster Kondensator (38,43) und zwischen der Mittelklemme (36,41) und einer negativen Klemme (37,42) ein zweiter Kondensator (39,44) angeordnet ist, und
- dass jeweils die beiden Kondensatoren (38,39,43,44) den gleichen Kapazitätswert aufweisen.

9. Vorrichtung nach Anspruch 7 oder 8, dadurch gekennzeichnet,
- dass die Dreipunkt-Wechselrichter (12,13) mit GTO-Thyristoren oder mit IGTB's beschaltet sind.

10. Vorrichtung nach Anspruch 8, dadurch gekennzeichnet,
- dass der Ausgleichsleiter (14) mit den beiden Mittelklemmen (36,41) der beiden Dreipunkt-Wechselrichter (12,13) verbunden ist, und
- dass der Ausgleichsleiter im Bereich nahe einer der Mittelklemmen (36) mit der Erde verbunden ist.

11. Vorrichtung nach einem der Ansprüche 6 bis 10, dadurch gekennzeichnet,
- dass der Ausgleichsleiter (14) als parallel zur Leitung (2) geführte Freileitung ausgeführt ist.

12. Vorrichtung nach Anspruch 5, dadurch gekennzeichnet,
- dass in den Verbindungsleitungen zwischen dem Symmetrierkompensator (11) und dem Übertragungsnetz (1) Steuerdrosseln (18,19,20,24,25,26) vorgesehen sind.
